# EUROPEAN PATENT SPECIFICATION

(11) **EP 3 477 982 B1**
(45) Date of publication and mention of the grant of the patent: **22.12.2021**
(21) Application number: 17306486.6
(22) Date of filing: 30.10.2017
(51) Int. Cl.: H04W 12/12, H04L 29/06

(54) **LOCATION BASED AUTHENTICATION**
STANDORTBASIERTE AUTHENTIFIZIERUNG
AUTHENTIFICATION BASÉE SUR LA LOCALISATION

(43) Date of publication of application: 01.05.2019
(73) Proprietor: Hewlett-Packard Development Company, L.P., Spring TX 77389 (US)
(72) Inventor: SCHIFFMAN, Joshua Serratelli, Bristol, BS1 6NP (GB); BALACHEFF, Boris, 92100 Boulogne-Billancourt (FR); GREWAL, Gurchetan, Bristol, Bristol BS34 8QZ (GB)
(74) Representative: Bryers LLP

(56) References cited:
- WO-A1-2016/195545
- US-A1- 2013 127 591
- US-A1- 2015 058 941
- US-A1- 2016 087 952

## Description

### BACKGROUND

Password based authentication can be burdensome for users. Some authentication systems can leverage the use of location-based access control. This can be performed using GPS and/or wireless radio Received Signal Strength Indicator (RSSI) values for example. GPS is weak indoors and RSSI values are notoriously erratic and subject to spoofing. Moreover, providing specific location information may leak personally identifiable information.
Document WO2016/195545 A1 discloses an authentication method for a data recording device.
Document US 2013/0127591 A1 Method and system for secure facilities access using multifactor biometric authentication

### BRIEF DESCRIPTION OF THE DRAWINGS

The scope of the invention is defined by the appended independent claims. Various features and advantages of certain examples will be apparent from the detailed description which follows, taken in conjunction with the accompanying drawings, which together illustrate, by way of example only, a number of features, and wherein:
Figure 1 is a schematic representation of a system according to an example;
Figure 2 is a schematic representation of a comparison apparatus according to an example;
Figure 3 is a flowchart of a method according to an example; and
Figure 4 shows an example of a processor associated with a memory according to an example.

### DETAILED DESCRIPTION

In the following description, for purposes of explanation, numerous specific details of certain examples are set forth. Reference in the specification to "an example" or similar language means that a particular feature, structure, or characteristic described in connection with the example is included in at least that one example, but not necessarily in other examples.

According to an example, there is provided a method and system that removes an authentication burden from users by automatically authenticating devices if they are present in a particular environment. For example, many internet of things (loT) devices are equipped with sensors that can be used to collect an environmental fingerprint that can be used to provide a device location. Such location fingerprints can be used to match devices in the same general area and establish "co-presence." In an example, a central hub based approach is described, in which the hub acts as a location fingerprint matching service among managed devices in an ad-hoc fashion. Unlike location based authentication, users do not need to pre-select a location where the authentication is not needed. Although the system works with a cloud service it can also work directly with local devices.

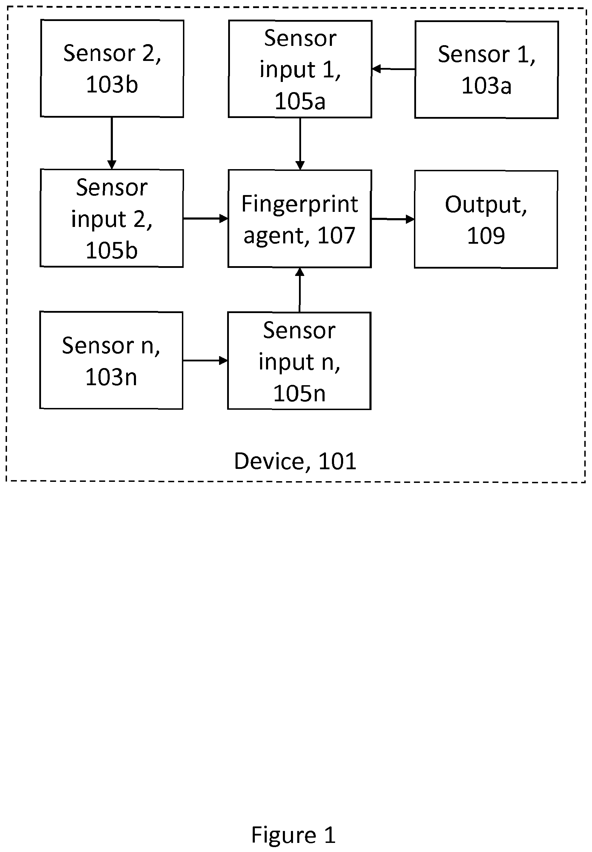

Figure 1 is a schematic representation of a system according to an example. A device 101 comprises multiple sensors, 103a-n, each of which can generate a sensor input, 105a-n to a fingerprint agent 107 of the device 101. In an example, one or more of the sensors 103a-n can pass data to the fingerprint agent 107 representing respective measures for environmental characteristics. That is, each sensor 103a-n can generate data representing a value for an environmental characteristic local to the device 101. The data is provided to the agent 107 as multiple sensor inputs 105a-n. Fingerprint agent 107 can generate an output 109 that can be used to determine the location of the device 101, as will be described below in more detail. That is, each sensor 103a-n can be used to generate a measure representing a location fingerprint for a certain environmental characteristic. As such, device 101 can have a range of integrated sensors / connectors, such as networking interfaces, cameras, microphones, accelerometers, and so on, that can be used to generate the location fingerprints.

According to an example, sensors 103a-n can comprise one or more of the following:
Networking Interfaces: Network connectivity can provide a range of clues as to device 101 environment. Besides GeolP, which is a form of geolocation that can determine a device's geographic location by identifying the device's IP address, tools and information such as ipconfig, tracert, ASN lookup and network 'noise' from broadcasts can give indications of the device's environment, and therefore its location. For example, a clear picture of environment can be determined from IP address, a local network access gateway to which the device is connected and other factors as to whether the device is connected to within an organisation's network, thereby providing a location fingerprint.

Cameras: Cameras can be activated to recognize a device environment directly. This can provide strong evidence of the environment. For example, machine learning and in particular image recognition can enable device 101 to use a camera to classify its environment into one of a handful of possibilities, such as 'office', 'kitchen', and so on, which can be used in the form of image data as a location fingerprint for example.

Sound: One or more built-in microphones can be used to help determine if two devices are in the same locality. For example, a decibel measure can be sued, giving indication of how busy the environment is. The measure can form a location fingerprint.

Temperature sensors: These sensors can measure the temperature of the environment which can be used as an additional measure of locality of devices. The measure can form a location fingerprint.

Hygrometer: These humidity sensors can measure the water vapors in the environment which can be used as an additional measure of locality of devices. The measure can form a location fingerprint.

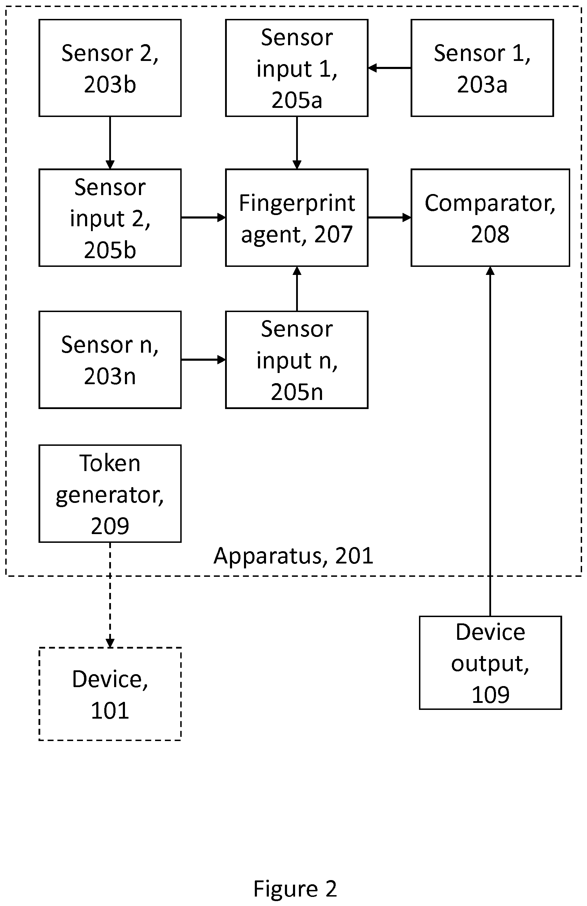

Figure 2 is a schematic representation of a comparison apparatus according to an example. The comparison apparatus 201 can be in the form of a hub that takes input 205a-n from sensors 203a-n and uses this input to generate a set of fingerprints using an agent 207. It compares its own fingerprints generate using agent 207 with the fingerprints provided by external devices. For example, with reference to figure 1, output 109 from device 101 is received by comparator 208 of apparatus 201, which also receives data from agent 207 representing measures for one or more fingerprints generated using the sensors 203a-n of apparatus 201. The comparator 208 compares the fingerprints from agent 207 to those generated by the sensors 103a-n of device 101 using agent 107 in order to determine a measure of similarity between respective ones of the fingerprints. For example, a temperature measurement from device 101, forming a first location fingerprint of device 101 can be compared to a temperature measurement generated using one of the sensors 203a-n of apparatus 201. If the two measurements match, to within a predefined tolerance, such as +/- 2 degrees for example, to account for fluctuations as result of slight positional differences of the device 101 and the apparatus 201 in the location in question, then the location of the device 101 can be said to be the same as the position of the apparatus 201.

According to an example, a fuzzy hashing scheme can be used for device authentication. For example, a device location fingerprint can be used to generate a random string (forming a symmetric key) using a fuzzy extractor, which may use a hash function for example. A keyed-hash message authentication code (HMAC) can be used to hash the string with a challenge received from the apparatus 201. The result (response) can be transmitted to the apparatus 201 can compared with a symmetric key generated at the apparatus using a corresponding location fingerprint derived at the apparatus 201. If the keys match, the device is in the same locale as the apparatus (since the keys are derived using location fingerprints). A similar process can be used to authenticate a device using entropy extraction to generate a key from a location fingerprint.

Once the locality has been established the apparatus 201 can provide a token to the device 101 that allows them access to certain resources or use certain services using a token generator 209. In an example, the apparatus 201 and the device 101 can periodically generate and compare signatures to make sure that the device 101 still satisfies any locality requirements for using the token. The example described with reference to figures 1 and 2 concentrated on one device 101. However, apparatus 201 can communicate with multiple such devices in a given locality.

In some examples, the apparatus 201 can take the number of devices present in the locality into account as well to generate location fingerprints. This means that if a new device enters or leaves the locality the fingerprints are updated. This stops an attacker to steal the finger prints and provide it to a device that does not satisfy the locality conditions.

In an example, the apparatus 201 is a trusted comparison agent, whereby the authenticating device / user can trust the apparatus 201 not to reuse and thus impersonate the device. That is, the apparatus 201 is trusted to compare fingerprints.

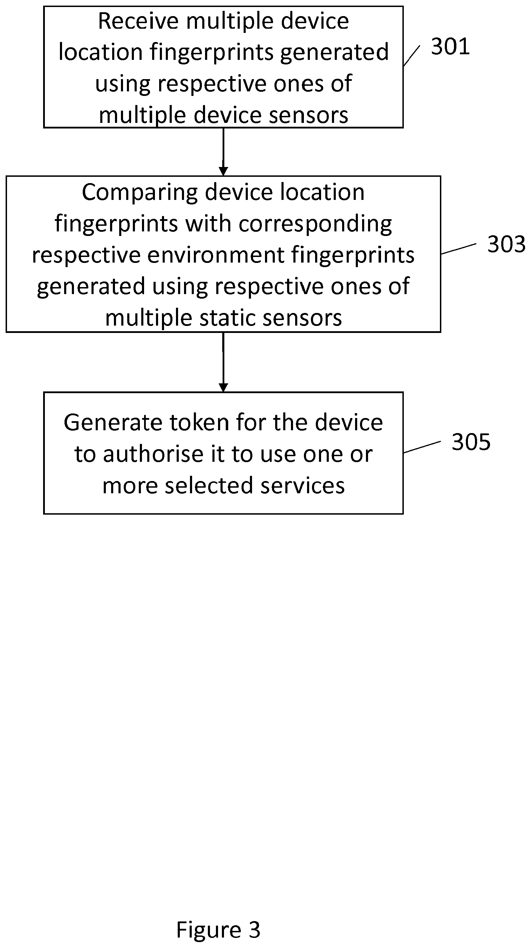

Figure 3 is a flowchart of a method according to an example. More particularly, figure 3 is a flowchart of a method for location-based authentication of a device according to an example. In block 301, multiple device location fingerprints generated using respective ones of multiple device sensors are received. For example, sensors 103a-n of device 101 can respectively generate inputs for the agent 107 that can use the inputs 105a-n to generate one or more location fingerprints for device 101 based on various environmental characteristics as described above, such as IP address, temperature and so on. The output 109 of the agent 107 can be received by comparator 208 of apparatus 201. That is, in an example, comparator 208 receives data representing one or multiple location fingerprints generated by device 101.

In block 303, the device location fingerprints are compared with corresponding respective environment fingerprints generated using respective ones of multiple static sensors. That is, in an example, apparatus 201 uses respective ones of sensors 203a-n to generate inputs 205a-n representing measure for various environmental characteristics at the location where the apparatus 201 is deployed. This may be a meeting room or entrance to a shop for example. As such, the sensors 203a-n of apparatus 201 are considered static inasmuch as they are provided in a given location where it is desired to authentic mobile devices that may transiently pass through the location. In an example, apparatus may be mobile to the extent that it can be re-deployed within a given locale, e.g. from one meeting room to another, or from one side of a shop entrance to another and so on. However, when deployed, the sensors remain in place.

The output 109 from device 101 is received by apparatus 201. For example, the output 109 can be a data message comprising data representing multiple location fingerprints derived by the agent 107 of the device 101. This can be transmitted from the device 101 over a wired or wireless communication protocol (e.g. Bluetooth, wifi and so on) or near field technology. In an example, the device can broadcast the message periodically to any apparatus 201 that may be communication range. Alternatively, a user may prompt transmission when she is aware of an apparatus being in the given location. Further alternatively, the apparatus 201 may intermittently poll for such data from any devices in range. A combination of these options may be utilised.

Comparator or comparison module 209 receives the output 109 and compares the multiple location fingerprints derived by the agent 107 of the device 101 to multiple corresponding location fingerprints derived by the agent 207 of the apparatus 201. For example, apparatus 201 may comprise a set of sensors 203a-n to derive environmental data for characteristics such as those described above. A device 101 may comprises a sub-set of such sensors. Alternatively, device 101 may comprise the same sensors as apparatus 201. Each input 105a-n can include an identifier to indicate what type of measurement it relates to (e.g. temperature, image capture and so on). This can be matched to a corresponding location fingerprint generated by apparatus 201 for comparison (i.e. temperature value from device 101 is compared with temperature value from apparatus 201 and so on). This can proceed for all available location fingerprints from device 101.

In block 305, a token for the device to authorise it to use one or more selected services is generated. For example, the result of a comparison of location fingerprints can indicate that a device 101 is in the same location (e.g. room) as apparatus 201. Accordingly, apparatus 201 can issue device 101 with a token using a token generator 209, which may be a temporary token for example, to use one or more services at that location, such as a network (e.g. wifi) or a hardware apparatus (such as a projector) and so on. That is, for a device authenticated as being in the same location as the apparatus 201, a token can be provided to enable the device 101 to utilise one or more services at that location. The token generator 209 can comprise a set of tokens that can be issued to devices and which may be revoked or recycled. Alternatively, the generator 209 can generate a token for a device using data associated with the device that can be provided to the apparatus 201 by device 101, such as a device ID or cryptographic key and so on.

Examples in the present disclosure can be provided as methods, systems or machine-readable instructions. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a general-purpose computer, a special purpose computer, an embedded processor or processors of other programmable data processing devices to realize the functions described in the description and diagrams. In particular, a processor or processing apparatus may execute the machine-readable instructions. Thus, modules of apparatus (for example, agents 107, 207, comparator 208, generator 209) may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode.

For example, the instructions may be provided on a non-transitory computer readable storage medium encoded with instructions, executable by a processor.

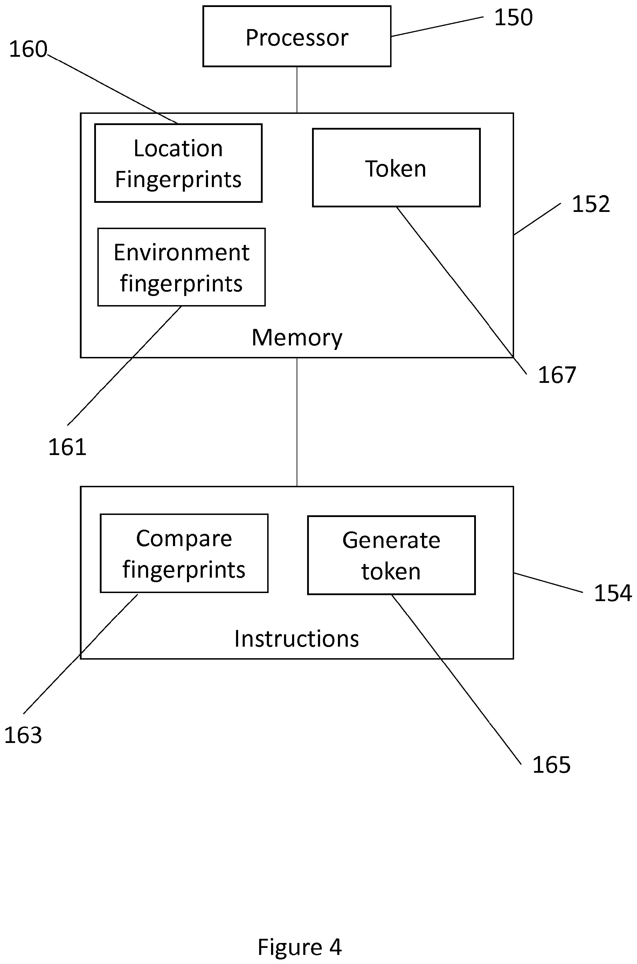

Figure 4 shows an example of a processor 150 associated with a memory 152. The memory 152 comprises machine readable instructions 154 which are executable by the processor 150. The instructions 154 comprise instructions to:
receive multiple device location fingerprints 160 generated using respective ones of multiple device sensors;
compare 163 the device location fingerprints with corresponding respective environment fingerprints 161 generated using respective ones of multiple static sensors;
generate 165 a token 167 for the device to authorise it to use one or more selected services;
generate data representing a measure of an environmental characteristic using a device sensor;
form a location fingerprint for the device using the data representing a measure of an environmental characteristic;
applying respective identifiers to data representing the multiple device location fingerprints to indicate the basis of the fingerprint;
determine the similarity between the device location fingerprints and the environment fingerprints;
apply a tolerance to the comparison;
authenticate the device when a threshold number of device location fingerprints match with corresponding respective environment fingerprints.

Such machine-readable instructions may also be loaded onto a computer or other programmable data processing devices, so that the computer or other programmable data processing devices perform a series of operations to produce computer-implemented processing, thus the instructions executed on the computer or other programmable devices provide a operation for realizing functions specified by flow(s) in the flow charts and/or block(s) in the block diagrams.

Further, the teachings herein may be implemented in the form of a computer software product, the computer software product being stored in a storage medium and comprising a plurality of instructions for making a computer device implement the methods recited in the examples of the present disclosure.

The word "comprising" does not exclude the presence of elements other than those listed in a claim, "a" or "an" does not exclude a plurality, and a single processor or other unit may fulfil the functions of several units recited in the claims.

## Claims

1. A method for location-based authentication of a device (101), the method comprising:
receiving (301) multiple device location fingerprints generated using respective ones of multiple device sensors (103);
comparing (303) the device location fingerprints with corresponding respective environment fingerprints generated using respective ones of multiple static sensors (203) in a location;
determining whether the result of the comparison indicates a matching location; and
in response to determining that the result of the comparison indicates a matching location, generating (305) a token for the device (101) to authorise it to use one or more selected services at the location.

2. A method as claimed in claim 1, further comprising, before the step of receiving (301) multiple device location fingerprints generated using respective ones of multiple device sensors (103), and wherein the multiple device location fingerprints are received as a data message comprising data representing the multiple device location fingerprints,
generating, by each device sensor of the multiple device sensors, data representing a measure of an environmental characteristic and providing, by each device sensor of the multiple device sensors, the data representing a measure of an environmental characteristic, to a fingerprint agent; and
for each data representing a measure of an environmental characteristic, forming, by the fingerprint agent, a corresponding device location fingerprint of the multiple device location fingerprints using the data representing a measure of an environmental characteristic; and
transmitting, by the fingerprint agent, the data message comprising data representing the multiple device location fingerprints.

3. A method as claimed in claim 1, further comprising:
applying respective identifiers to data representing the multiple device location fingerprints to indicate the basis of the fingerprint.

4. A method as claimed in claim 1, wherein comparing the device location fingerprints with corresponding respective environment fingerprints generated using respective ones of multiple static sensors comprises determining the similarity between the device location fingerprints and the environment fingerprints.

5. A method as claimed in claim 1, wherein determining whether the result of the comparison indicates a matching location comprises applying a tolerance to the comparison.

6. A method as claimed in claim 1, wherein a matching location is indicated when a threshold number of device location fingerprints match with corresponding respective environment fingerprints.

7. Apparatus (201), comprising:
multiple static sensors (203) to generate data representing multiple environment characteristics in a location;
an agent (207) to receive the data representing the multiple characteristics and generate respective apparatus location fingerprints;
a comparison module (208) to:
receive the apparatus location fingerprints;
compare the apparatus location fingerprints to device location fingerprints received from a device (101); and
determine whether the result of the comparison indicates a matching location; and
a token generator (209) to generate a token for the device (101) to enable access to a service in the location in response to a determination that the result of the comparison indicates a matching location.

8. Apparatus (201) as claimed in claim 7, the apparatus (201) further adapted to:
receive the device location fingerprints from the device (101).

9. Apparatus (201) as claimed in claim 8, the comparison module (208) further adapted to:
determine a measure representing similarity between the device location fingerprints and the apparatus location fingerprints on the basis of the comparison of the apparatus location fingerprints to the device location fingerprints.

10. A non-transitory machine-readable storage medium encoded with instructions executable by a processor for location-based authentication of a device, the machine-readable storage medium comprising instructions to:
compare a set of device location fingerprints generated using respective ones of multiple device sensors (103) with corresponding respective environment fingerprints generated using respective ones of multiple static sensors (203) in a location;
determine whether the result of the comparison indicates a matching location; and
in response to determining that the result of the comparison indicates a matching location generate a token for the device (101) to authorise it to use one or more selected services at the location.

11. A non-transitory machine-readable storage medium as claimed in claim 10, further encoded with instructions to;
generate a measure representing similarity between the device location fingerprints and the apparatus location fingerprints.

12. A non-transitory machine-readable storage medium as claimed in claim 11, further encoded with instructions to:
apply respective identifiers to data representing the multiple device location fingerprints to indicate the basis of the fingerprint.

## Patentansprüche

1. Verfahren für eine standortbasierte Authentifizierung einer Vorrichtung (101), wobei das Verfahren Folgendes umfasst:
Empfangen (301) mehrerer Fingerabdrücke des Vorrichtungsstandorts, die unter Verwendung jeweiliger mehrerer Vorrichtungssensoren (103) erzeugt werden;
Vergleichen (303) der Fingerabdrücke des Vorrichtungsstandorts mit entsprechenden jeweiligen Umgebungsfingerabdrücken, die unter Verwendung jeweiliger mehrerer statischer Sensoren (203) an einem Standort erzeugt werden;
Bestimmen, ob das Ergebnis des Vergleichs einen übereinstimmenden Standort anzeigt; und
als Reaktion auf das Bestimmen, dass das Ergebnis des Vergleichs einen übereinstimmenden Standort anzeigt, Erzeugen (305) eines Tokens für die Vorrichtung (101), um sie zu autorisieren, einen oder mehrere ausgewählte Dienste an dem Standort zu verwenden.

2. Verfahren nach Anspruch 1, das ferner vor dem Schritt des Empfangens (301) mehrerer Fingerabdrücke des Vorrichtungsstandorts, die unter Verwendung jeweiliger mehrerer Vorrichtungssensoren (103) erzeugt wurden, und wobei die mehreren Fingerabdrücke des Vorrichtungsstandorts als eine Datennachricht empfangen werden, die Daten umfasst, die die mehreren Fingerabdrücke des Vorrichtungsstandorts darstellen, Folgendes umfasst:
Erzeugen, durch jeden Vorrichtungssensor der mehreren Vorrichtungssensoren, von Daten, die ein Maß für eine Umgebungseigenschaft darstellen, und Bereitstellen, durch jeden Vorrichtungssensor der mehreren Vorrichtungssensoren, der Daten, die ein Maß für eine Umgebungseigenschaft darstellen, an einen Fingerabdruckagenten; und
für jede Daten, die ein Maß für eine Umgebungseigenschaft darstellen, Ausbilden, durch den Fingerabdruckagenten, eines entsprechenden Fingerabdrucks des Vorrichtungsstandorts der mehreren Fingerabdrücke des Vorrichtungsstandorts unter Verwendung der Daten, die ein Maß für eine Umwelteigenschaft darstellen; und
Übertragen, durch den Fingerabdruckagenten, der Datennachricht, die Daten umfasst, die die Fingerabdrücke mehrerer Vorrichtungsstandorte darstellen.

3. Verfahren nach Anspruch 1, das ferner Folgendes umfasst:
Anwenden jeweiliger Kennungen auf Daten, die die Fingerabdrücke mehrerer Vorrichtungsstandorte darstellen, um die Basis des Fingerabdrucks anzuzeigen.

4. Verfahren nach Anspruch 1, wobei das Vergleichen der Fingerabdrücke des Vorrichtungsstandorts mit entsprechenden jeweiligen Umgebungsfingerabdrücken, die unter Verwendung jeweiliger mehrerer statischer Sensoren erzeugt werden, das Bestimmen der Ähnlichkeit zwischen den Fingerabdrücken des Vorrichtungsstandorts und den Umgebungsfingerabdrücken umfasst.

5. Verfahren nach Anspruch 1, wobei das Bestimmen, ob das Ergebnis des Vergleichs einen übereinstimmenden Standort anzeigt, das Anwenden einer Toleranz auf den Vergleich umfasst.

6. Verfahren nach Anspruch 1, wobei ein übereinstimmender Standort angezeigt wird, wenn eine Schwellenwertanzahl von Fingerabdrücken des Vorrichtungsstandorts mit den entsprechenden jeweiligen Umgebungsfingerabdrücken übereinstimmt.

7. Einrichtung (201), die Folgendes umfasst:
mehrere statische Sensoren (203), um Daten zu erzeugen, die mehrere Umgebungseigenschaften an einem Standort darstellen;
einen Agenten (207), um die Daten zu empfangen, die die mehreren Eigenschaften darstellen, und um jeweilige Fingerabdrücke des Einrichtungsstandorts zu erzeugen;
ein Vergleichsmodul (208), das zu Folgendem dient:
Empfangen der Fingerabdrücke des Einrichtungsstandorts;
Vergleichen der Fingerabdrücke des Einrichtungsstandorts mit Fingerabdrücken des Vorrichtungsstandorts, die von einer Vorrichtung (101) empfangen werden; und
Bestimmen, ob das Ergebnis des Vergleichs einen übereinstimmenden Standort anzeigt; und
einen Tokengenerator (209), um ein Token für die Vorrichtung (101) zu erzeugen, um einen Zugriff auf einen Dienst an dem Standort als Reaktion auf eine Bestimmung zu ermöglichen, dass das Ergebnis des Vergleichs einen übereinstimmenden Standort anzeigt.

8. Einrichtung (201) nach Anspruch 7, wobei die Einrichtung (201) ferner zu Folgendem angepasst ist:
Empfangen der Fingerabdrücke des Vorrichtungsstandorts von der Vorrichtung (101).

9. Einrichtung (201) nach Anspruch 8, wobei das Vergleichsmodul (208) ferner zu Folgendem angepasst ist:
Bestimmen eines Maßes, das die Ähnlichkeit zwischen den Fingerabdrücken des Vorrichtungsstandorts und den Fingerabdrücken des Einrichtungsstandorts auf der Basis des Vergleichs der Fingerabdrücke des Einrichtungsstandorts mit den Fingerabdrücken des Vorrichtungsstandorts darstellt.

10. Nicht flüchtiges maschinenlesbares Speichermedium, das mit Anweisungen codiert ist, die durch einen Prozessor für die standortbasierte Authentifizierung einer Vorrichtung durchführbar sind, wobei das maschinenlesbare Speichermedium Anweisungen für Folgendes umfasst:
Vergleichen eines Satzes von Fingerabdrücken des Vorrichtungsstandorts, die unter Verwendung jeweiliger mehrerer Vorrichtungssensoren (103) erzeugt werden, mit entsprechenden jeweiligen Umgebungsfingerabdrücken, die unter Verwendung jeweiliger mehrerer statischer Sensoren (203) an einem Standort erzeugt werden;
Bestimmen, ob das Ergebnis des Vergleichs einen übereinstimmenden Standort anzeigt; und
als Reaktion auf das Bestimmen, dass das Ergebnis des Vergleichs einen übereinstimmenden Standort anzeigt, Erzeugen eines Tokens für die Vorrichtung (101), um sie zu autorisieren, einen oder mehrere ausgewählte Dienste an dem Standort zu verwenden.

11. Nicht flüchtiges maschinenlesbares Speichermedium nach Anspruch 10, das ferner mit Anweisungen für Folgendes codiert ist:
Erzeugen eines Maßes, das die Ähnlichkeit zwischen den Fingerabdrücken des Vorrichtungsstandorts und den Fingerabdrücken des Einrichtungsstandorts darstellt.

12. Nicht flüchtiges maschinenlesbares Speichermedium nach Anspruch 11, das ferner mit Anweisungen für Folgendes codiert ist:
Anwenden jeweiliger Kennungen auf Daten, die die Fingerabdrücke mehrerer Vorrichtungsstandorte darstellen, um die Basis des Fingerabdrucks anzuzeigen.

## Revendications

1. Procédé d'authentification basée sur l'emplacement d'un dispositif (101), le procédé comprenant :
la réception (301) de multiples empreintes digitales d'emplacement de dispositif générées à l'aide d'empreintes respectives de multiples capteurs de dispositif (103) ;
la comparaison (303) des empreintes digitales d'emplacement de dispositif à des empreintes digitales d'environnement respectives correspondantes générées à l'aide d'empreintes respectives de multiples capteurs statiques (203) dans un emplacement ;
la détermination de savoir si le résultat de la comparaison indique un emplacement concordant ; et
en réponse à la détermination selon laquelle le résultat de la comparaison indique un emplacement concordant, la génération (305) d'un jeton pour le dispositif (101) afin de l'autoriser à utiliser un ou plusieurs services sélectionnés à l'emplacement.

2. Procédé selon la revendication 1, comprenant en outre, avant l'étape de réception (301) de multiples empreintes digitales d'emplacement de dispositif générées à l'aide d'empreintes respectives de multiples capteurs de dispositif (103), et dans lequel les multiples empreintes digitales d'emplacement de dispositif sont reçues sous forme de message de données comprenant des données représentant les multiples empreintes digitales d'emplacement de dispositif,
la génération, par chaque capteur de dispositif des multiples capteurs de dispositif, de données représentant une mesure d'une caractéristique environnementale et la fourniture, par chaque capteur de dispositif des multiples capteurs de dispositif, des données représentant une mesure d'une caractéristique environnementale, à un agent d'empreinte digitale ;
et
pour chaque donnée représentant une mesure d'une caractéristique environnementale, la formation, par l'agent d'empreinte digitale, d'une empreinte digitale d'emplacement de dispositif correspondante des multiples empreintes digitales d'emplacement de dispositif à l'aide des données représentant une mesure d'une caractéristique environnementale ; et la transmission, par l'agent d'empreinte digitale, du message de données comprenant des données représentant les multiples empreintes digitales d'emplacement de dispositif.

3. Procédé selon la revendication 1, comprenant en outre :
l'application d'identifiants respectifs aux données représentant les multiples empreintes digitales d'emplacement de dispositif pour indiquer la base de l'empreinte digitale.

4. Procédé selon la revendication 1, dans lequel la comparaison des empreintes digitales d'emplacement de dispositif à des empreintes digitales d'environnement respectives correspondantes générées à l'aide d'empreintes respectives de multiples capteurs statiques comprend la détermination de la similitude entre les empreintes digitales d'emplacement de dispositif et les empreintes digitales d'environnement.

5. Procédé selon la revendication 1, dans lequel la détermination de savoir si le résultat de la comparaison indique un emplacement concordant comprend l'application d'une tolérance à la comparaison.

6. Procédé selon la revendication 1, dans lequel un emplacement concordant est indiqué lorsqu'un nombre seuil d'empreintes digitales d'emplacement de dispositif concorde avec des empreintes digitales d'environnement respectives correspondantes.

7. Appareil (201) comprenant :
de multiples capteurs statiques (203) pour générer des données représentant de multiples caractéristiques d'environnement dans un emplacement ;
un agent (207) pour recevoir les données représentant les multiples caractéristiques et générer des empreintes digitales d'emplacement d'appareil respectives ;
un module de comparaison (208) pour :
recevoir les empreintes digitales d'emplacement d'appareil ;
comparer les empreintes digitales d'emplacement d'appareil à des empreintes digitales d'emplacement de dispositif reçues d'un dispositif (101) ; et
déterminer si le résultat de la comparaison indique un emplacement concordant ; et
un générateur de jetons (209) pour générer un jeton pour le dispositif (101) afin de permettre l'accès à un service dans l'emplacement en réponse à une détermination selon laquelle le résultat de la comparaison indique un emplacement concordant.

8. Appareil (201) selon la revendication 7, l'appareil (201) étant en outre adapté pour :
recevoir les empreintes digitales d'emplacement de dispositif du dispositif (101).

9. Appareil (201) selon la revendication 8, le module de comparaison (208) étant en outre adapté pour :
déterminer une mesure représentant la similitude entre les empreintes digitales d'emplacement de dispositif et les empreintes digitales d'emplacement d'appareil sur la base de la comparaison des empreintes digitales d'emplacement d'appareil aux empreintes digitales d'emplacement de dispositif.

10. Support de stockage lisible par machine non transitoire codé avec des instructions exécutables par un processeur pour l'authentification basée sur l'emplacement d'un dispositif, le support de stockage lisible par machine comprenant des instructions pour :
comparer un ensemble d'empreintes digitales d'emplacement de dispositif générées à l'aide d'empreintes respectives de multiples capteurs de dispositif (103) à des empreintes digitales d'environnement respectives correspondantes générées à l'aide d'empreintes respectives de multiples capteurs statiques (203) dans un emplacement ;
déterminer si le résultat de la comparaison indique un emplacement concordant ; et
en réponse à la détermination selon laquelle le résultat de la comparaison indique un emplacement concordant, générer un jeton pour le dispositif (101) afin de l'autoriser à utiliser un ou plusieurs services sélectionnés à l'emplacement.

11. Support de stockage non transitoire lisible par machine selon la revendication 10, codé en outre avec des instructions pour ;
générer une mesure représentant la similitude entre les empreintes digitales d'emplacement de dispositif et les empreintes digitales d'emplacement d'appareil.

12. Support de stockage non transitoire lisible par machine selon la revendication 11, codé en outre avec des instructions pour :
appliquer des identifiants respectifs aux données représentant les multiples empreintes digitales d'emplacement de dispositif pour indiquer la base de l'empreinte digitale.
